# EUROPEAN PATENT APPLICATION

(11) **EP 4 290 654 A1**
(43) Date of publication of application: **13.12.2023**
(21) Application number: 22876721.6
(22) Date of filing: 15.09.2022
(51) Int. Cl.: H01M 50/184, H01M 50/186, H01M 50/557, H01M 50/531, H01M 50/342, H01M 50/178

(54) **SECONDARY BATTERY**

(30) Priority: 01.10.2021 KR 20210131224; 10.08.2022 KR 20220099996
(71) Applicant: LG Energy Solution, Ltd., Seoul 07335 (KR)
(72) Inventor: KANG, Gyung-Soo, Daejeon 34122 (KR); LEE, Jae-Ho, Daejeon 34122 (KR); LIM, Hun-Hee, Daejeon 34122 (KR)
(74) Representative: Plasseraud IP
(86) International application number: PCT/KR2022/013824
(87) International publication number: WO 2023/054946

(57) **Abstract**

A secondary battery according to an embodiment of the present disclosure includes an electrode assembly to which an electrode lead is attached; a case accommodating the electrode assembly; a sealing portion formed to seal the electrode assembly in the case; and a lead film surrounding a portion of the outer surface of the electrode lead and interposed between the electrode lead and the sealing portion, wherein at least a partial region of an edge portion facing the electrode assembly in the lead film has a non-flat shape.

## Description

### TECHNICAL FIELD

The present disclosure relates to a secondary battery, and more specifically, to a secondary battery having improved safety.

The present application claims priority to Korean Patent Application No. 10-2021-0131224 filed on October 1, 2021 and Korean Patent Application No. 10-2022-0099996 filed on August 10, 2022, the disclosures of which are incorporated herein by reference.

### BACKGROUND ART

Mobile IT devices such as mobile phones, laptops, and tablet PCs are closely related to modern life, and demand for secondary batteries, which are key components, is also increasing rapidly together with the growth of the IT industry market. The secondary battery is an eco-friendly battery technology that may be used repeatedly through charge/discharge and does not use harmful substances such as lead, nickel, and cadmium, and it has an advantage of having a high energy density which is lightweight and capable of storing a lot of energy in a small volume, thereby forming the core of the new future growth power industry. In particular, lithium secondary batteries are most widely used as a power source for mobile IT, which is closely related to human life, and recently, their utilization as a power source for electric vehicles and a power storage device for renewable energy has also been continuously expanded.

In general, a secondary battery is composed of a positive electrode, a negative electrode, a separator separating the positive and negative electrodes, an electrolyte transferring lithium ions through the separator, a case accommodating them, and an electrode lead allowing to be a passage for current out of the case. In addition, a lead film may be further included, and the lead film is bound to the electrode lead to serve to seal the electrode lead and the case while preventing a short circuit from occurring between the electrode lead and the case.

In the case of such a secondary battery, there is a tendency to be vulnerable to internal pressure caused by gas generated due to operation of the battery, and thus it is necessary to develop a secondary battery having sufficient rigidity to withstand such internal pressure.

### DISCLOSURE

### Technical Problem

The present disclosure is designed to solve the problems of the related art, and therefore the present disclosure is directed to providing a secondary battery having improved safety.

### Technical Solution

A secondary battery according to an embodiment of the present disclosure for solving the above-described problems includes an electrode assembly to which an electrode lead is attached; a case accommodating the electrode assembly; a sealing portion formed to seal the electrode assembly in the case; and a lead film surrounding a portion of the outer surface of the electrode lead and interposed between the electrode lead and the sealing portion, wherein at least a partial region of an edge portion facing the electrode assembly in the lead film has a non-flat shape.

A radius of curvature of the edge portion facing the electrode assembly in the lead film may be approximately 50 mm to 200 mm.

The lead film may have a convex shape in a direction away from the electrode assembly at a central portion along a second direction perpendicular to a first direction that is an extension direction of the electrode lead.

A width of the lead film along the first direction may be approximately 20% to 150% of a width of the sealing portion along the first direction.

The lead film may have a convex shape in a direction toward the electrode assembly at a central portion along a second direction perpendicular to a first direction that is an extension direction of the electrode lead.

A width of the lead film along the first direction may be approximately 20% to 150% of a width of the sealing portion along the first direction.

The lead film may include a first lead film located relatively close to the electrode assembly; and a second lead film located relatively far from the electrode assembly.

The first lead film and the second lead film may be disposed to be spaced apart from each other.

The first lead film may have a convex shape in a direction toward the electrode assembly at a central portion along a second direction perpendicular to a first direction that is an extension direction of the electrode lead.

A width of the first lead film along the first direction may be approximately 10% to 40% of a width of the sealing portion along the first direction.

A width of the interface between the first lead film and the sealing portion along the first direction may be approximately 10% to 40% of a width of the sealing portion along the first direction.

The second lead film may have a convex shape in a direction away from the electrode assembly at a central portion along a second direction perpendicular to a first direction that is an extension direction of the electrode lead.

A width of the second lead film along the first direction may be approximately 10% to 40% of a width of the sealing portion along the first direction.

A width of the interface between the second lead film and the sealing portion along the first direction may be approximately 10% to 40% of a width of the sealing portion along the first direction.

The first lead film and the second lead film may be configured such that the interface between the first lead film and the sealing portion is primarily broken, and the interface between the second lead film and the sealing portion is secondarily broken when the internal pressure of the secondary battery increases.

A distance between the first lead film and the second lead film may be approximately 10% to 80% of a width of the sealing portion.

The planar shape of the lead film may be a closed loop shape with an empty center.

The lead film may have a convex shape in a direction toward the electrode assembly at a first portion facing the electrode assembly, and a convex shape in a direction away from the electrode assembly at a second portion located opposite to the first portion.

The first portion may have a convex shape in a direction toward the electrode assembly at a central portion along a second direction perpendicular to a first direction that is an extension direction of the electrode lead, and the second portion may have a convex shape in a direction away from the electrode assembly at a central portion along a second direction perpendicular to a first direction that is an extension direction of the electrode lead.

The lead film may be configured such that the interface between the lead film and the sealing portion is primarily broken at a first region where the first portion and the sealing portion are bonded, and the interface between the lead film and the sealing portion is secondarily broken at a second region where the second portion and the sealing portion are bonded when the internal pressure of the secondary battery increases.

A distance between the first region and the second region along the extension direction of the electrode lead may be approximately 10% to 80% of a width of the sealing portion along the extension direction of the electrode lead.

A total width of the lead film in a direction parallel to the extension direction of the electrode lead may be approximately 50% to 150% of a width of the sealing portion in a direction parallel to the extension direction of the electrode lead.

A width of the first region in the extension direction of the electrode lead may be approximately 10% to 40% of a width of the sealing portion in the extension direction of the electrode lead.

A width of the second region in the extension direction of the electrode lead may be approximately 10% to 40% of a width of the sealing portion in the extension direction of the electrode lead.

The secondary battery may be a pouch-type secondary battery.

### Advantageous Effects

The secondary battery according to an embodiment of the present disclosure may secure sealing properties of the battery by increasing the contact area between the electrode lead and the lead film.

The secondary battery according to an embodiment of the present disclosure may have enhanced rigidity against internal pressure, so that safety may be enhanced.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing an electrode lead, a lead film, and a sealing portion of a secondary battery according to an embodiment of the present disclosure.
FIG. 2 is a diagram showing an electrode lead, a lead film, and a sealing portion of a secondary battery according to another embodiment of the present disclosure.
FIG. 3 is a diagram showing an electrode lead, a lead film, and a sealing portion of a secondary battery according to still another embodiment of the present disclosure.
FIG. 4 is a diagram showing an electrode lead, a lead film, and a sealing portion of a secondary battery according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

A secondary battery according to an aspect of the present disclosure includes an electrode assembly to which an electrode lead is attached; a case accommodating the electrode assembly; a sealing portion formed to seal the electrode assembly in the case; and a lead film surrounding a portion of the outer surface of the electrode lead and interposed between the electrode lead and the sealing portion, wherein at least a partial region of an edge portion facing the electrode assembly in the lead film has a non-flat shape.

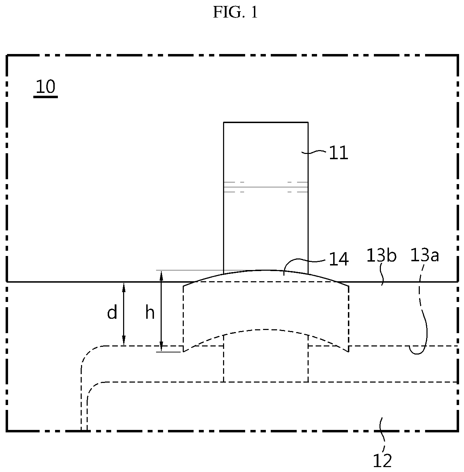

FIG. 1 is a diagram showing an electrode lead, a lead film, and a sealing portion of a secondary battery according to an embodiment of the present disclosure.

Referring to FIG. 1, a secondary battery 10 according to an embodiment of the present disclosure includes an electrode assembly 12 to which an electrode lead 11 is attached and a case.

The electrode assembly 12 includes a positive electrode plate, a negative electrode plate, and a separator. In the electrode assembly 12, a positive electrode plate and a negative electrode plate may be sequentially stacked with a separator interposed therebetween.

The positive electrode plate may include a positive electrode current collector made of a metal thin film having excellent conductivity, for example, an aluminum (Al) foil, and a positive electrode active material layer coated on at least one surface thereof. In addition, the positive electrode plate may include a positive electrode tab made of a metal material, for example, an aluminum (Al) material, at one end thereof. The positive electrode tab may extend and protrude from one end of the positive electrode plate, or may be welded to one end of the positive electrode plate or bonded thereto using a conductive adhesive.

The negative electrode plate may include a negative electrode current collector made of a conductive metal thin film, for example, a copper (Cu) foil, and a negative electrode active material layer coated on at least one surface thereof. In addition, the negative electrode plate may include a negative electrode tab formed of a metal material, for example, a copper (Cu) or a nickel (Ni) material, at one end thereof. The negative electrode tab may extend and protrude from one end of the negative electrode plate, or may be welded to one end of the negative electrode plate or bonded thereto using a conductive adhesive.

The separator may be interposed between the positive electrode plate and the negative electrode plate to electrically insulate the positive electrode plate and the negative electrode plate from each other, and may be formed in a porous membrane so that lithium ions or the like may pass between the positive electrode plate and the negative electrode plate. The separator may include, for example, a porous membrane using polyethylene (PE), polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may be a jelly-roll (winding-type) electrode assembly having a structure in which long sheet-type positive and negative electrodes are wound with a separator interposed therebetween, a stacked (stack-type) electrode assembly having a structure in which a plurality of positive and negative electrodes cut into units of a predetermined size are sequentially stacked with a separator interposed therebetween, a stack/folding type electrode assembly having a structure in which bi-cells or full-cells where positive and negative electrodes of a predetermined unit are stacked with a separator interposed therebetween are wound, or the like.

The case includes an accommodating portion 13a accommodating the electrode assembly 12 and a sealing portion 13b formed to seal the electrode assembly 12.

The sealing portion 13b refers to a portion that is fused along the outer circumferential surface of the accommodating portion 13a to seal the electrode assembly 12, and the fusion may be thermal fusion, ultrasonic fusion, or the like, but is not particularly limited as long as the sealing portion can be fused.

In an embodiment of the present disclosure, the case may be provided in a film form having a multilayer structure including an outer layer for protection against external impacts, a metal barrier layer for blocking moisture, and a sealant layer for sealing the case.

The outer layer may include other polyester-based films such as poly(ethylene terephthalate) (PET), polybutylene terephthalate, polyethylene naphthalate, polybutylene naphthalate, co-polyester, polycarbonate, nylon, or the like, and may be configured in a single layer or multiple layers.

The metal barrier layer may include aluminum, copper, or the like.

The sealant layer may include a sealant resin and may be formed in a single layer or multiple layers.

In an embodiment of the present disclosure, the sealant resin may include polypropylene (PP), acid modified polypropylene (PPa), random polypropylene, ethylene propylene copolymer, or two or more thereof. The ethylene propylene copolymer may include, ethylene-propylene rubber, ethylene-propylene block copolymer, and the like, but is not limited thereto.

In an embodiment of the present disclosure, the case may be in the form of a pouch.

In an embodiment of the present disclosure, when the case is in the form of a pouch, it may include an upper pouch and a lower pouch. When the case includes an upper pouch and a lower pouch, outer circumferential surfaces of the upper pouch and the lower pouch are fused to each other by heat and pressure to seal the battery.

When the case is in the form of a pouch, the sealing portion 13b may be sealed on four or three peripheral sides of the case. The three-sided sealing structure means a structure in which the upper pouch and the lower pouch are formed on one pouch sheet and then the boundary surface between the upper pouch and the lower pouch is bent to overlap the electrode assembly accommodating portions 13a formed in the upper pouch and the lower pouch, and in this state, the edges of the remaining three sides are sealed except for the bending portion.

Referring to FIG. 1, the electrode lead 11 may be accommodated in the case so that a portion thereof is exposed to the outside of the case.

Referring to FIG. 1, the secondary battery 10 according to an embodiment of the present disclosure includes a lead film 14.

The lead film 14 surrounds a portion of the outer surface of the electrode lead 11 and is interposed between the electrode lead 11 and the sealing portion 13b of the case where the electrode lead 11 protrudes. The lead film 14 may be located on at least one surface of the electrode lead 11. The lead film 14 is interposed between the electrode lead 11 and the sealing portion 13b of the case at a portion where the electrode lead protrudes to help binding of the electrode lead 11 and the sealing portion 13b of the case. Sealing of the battery occurs on the surface where the lead film 14 is in contact with the sealing portion 13b.

Referring to FIG. 1, in the lead film 14, a portion of an edge portion facing the electrode assembly 12 has a non-flat shape. When the lead film 14 has this shape, the contact area between the lead film 14 and the electrode lead 11 is large. In particular, in the lead film 14, the contact area between the lead film 14 and the electrode lead 11 is increased compared to a conventional secondary battery in which the edge portion facing the electrode assembly 12 has a flat structure. Accordingly, the adhesive strength between the electrode lead 11 and the sealing portion 13b increases, and thus the sealing strength between the electrode lead 11 and the sealing portion 13b may increase. As the sealing strength between the electrode lead 11 and the sealing portion 13b increases, the rigidity of the battery against internal pressure may increase.

In addition, according to this configuration of the present disclosure, the contact area between the lead film 14 and the sealing portion 13b may also be large. In particular, in the lead film 14, the contact area between the lead film 14 and the sealing portion 13b may be increased compared to a conventional secondary battery in which the edge portion facing the electrode assembly 12 has a flat structure. Accordingly, the adhesive strength between the electrode lead 11 and the sealing portion 13b increases, and thus the sealing strength between the electrode lead 11 and the sealing portion 13b may increase. As the sealing strength between the electrode lead 11 and the sealing portion 13b increases, the rigidity of the battery against the internal pressure may increase.

In another aspect, according to this configuration of the present disclosure, it is possible to uniformly transfer the pressure to the entire lead film 14 with respect to internal pressure generated inside the battery. Accordingly, the internal pressure is uniformly distributed throughout the lead film 14, and thus the rigidity of the battery against the internal pressure may be increased.

In an embodiment of the present disclosure, the edge portion facing the electrode assembly 12 in the lead film 14 may have a radius of curvature in the range of approximately 50 mm to 200 mm. When the radius of curvature of the edge portion satisfies the above-defined range, the contact area between the lead film 14 and the electrode lead 11 may be increased, and the contact area between the lead film 14 and the sealing portion 13b may also be easily increased.

Meanwhile, the lead film 14 may have a convex shape in a direction away from the electrode assembly 12 at a central portion along a second direction approximately perpendicular to a first direction that is an extension direction of the electrode lead 11. For example, the lead film 14 may have an approximately arch shape convex in an outer direction of the case.

Referring to FIG. 1, the width h of the lead film 14 along the first direction may be approximately 20% to 150% of the width d of the sealing portion 13b along the first direction. When the width h of the lead film 14 satisfies the above-defined range, the contact area between the lead film 14 and the electrode lead 11 may be increased, and the contact area between the lead film 14 and the sealing portion 13b may also be more easily increased.

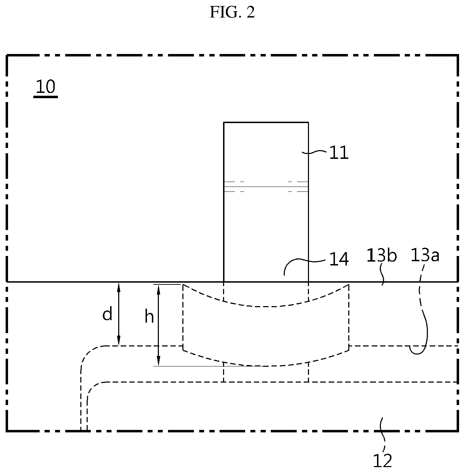

FIG. 2 is a diagram showing an electrode lead, a lead film, and a sealing portion of a secondary battery according to another embodiment of the present disclosure.

Referring to FIG. 2, the lead film 14 may have a convex shape in a direction toward the electrode assembly 12 at a central portion along a second direction approximately perpendicular to a first direction that is an extension direction of the electrode lead 11. For example, the lead film 14 may have an approximately arch shape convex in an outer direction of the case.

Even in this case, similarly to the case where the lead film 14 has the shape shown in FIG. 1, the width h of the lead film 14 along the first direction may be approximately 20% to 150% of the width d of the sealing portion 13b along the first direction. When the width h of the lead film 14 satisfies the above-defined range, the contact area between the lead film 14 and the electrode lead 11 may be increased, and the contact area between the lead film 14 and the sealing portion 13b may also be more easily increased.

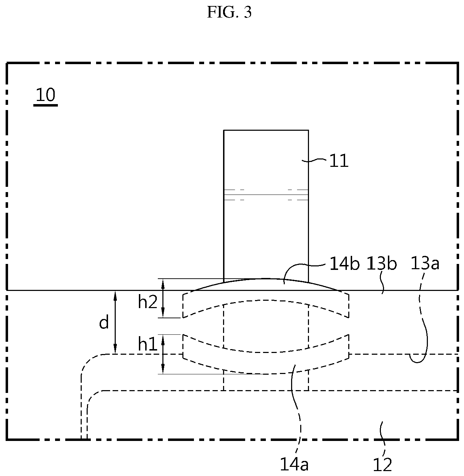

FIG. 3 is a diagram showing an electrode lead, a lead film, and a sealing portion of a secondary battery according to still another embodiment of the present disclosure.

Referring to FIG. 3, the lead film 14 may include a first lead film 14a located relatively close to the electrode assembly 12 and a second lead film 14b located relatively far from the electrode assembly 12. The first lead film 14a and the second lead film 14b may be disposed to be spaced apart from each other.

Referring to FIG. 3, the first lead film 14a may have a convex shape in a direction toward the electrode assembly 12 at a central portion along a second direction approximately perpendicular to a first direction that is an extension direction of the electrode lead 11. For example, the first lead film 14a may have an approximately arch shape convex in a direction toward the electrode assembly 12.

In FIG. 3, the shape of the first lead film 14a is illustrated as an approximately arch shape convex in a direction where the electrode assembly 12 is accommodated, but the shape of the first lead film 14a is not limited thereto.

In another embodiment of the present disclosure, the shape of the first lead film 14a may be an approximately arch shape convex in an outer direction of the case.

Referring to FIG. 3, the second lead film 14b may have a convex shape in a direction away from the electrode assembly 12 at a central portion along a second direction approximately perpendicular to a first direction that is an extension direction of the electrode lead 11. For example, the second lead film 14b may have an approximately arch shape convex in a direction away from the electrode assembly 12.

In FIG. 3, the shape of the second lead film 14b is illustrated as an approximately arch shape convex in an outer direction of the case, but the shape of the second lead film 14b is not limited thereto.

In another embodiment of the present disclosure, the shape of the second lead film 14b may be an approximately arch shape convex in a direction where the electrode assembly 12 is accommodated.

In the case of a secondary battery, a swelling phenomenon where the battery swells due to an increase in internal pressure may occur, which affects the safety of the battery. When the swelling phenomenon occurs, fracture may occur at the interface between the lead film 14 and the sealing portion 13b having a slightly weak adhesive force.

When the lead film 14 includes the first lead film 14a and the second lead film 14b, the lead film 14 may be configured such that the interface between the first lead film 14a and the sealing portion 13b is primarily broken, and then the interface between the second lead film 14b and the sealing portion 13b is secondarily broken during swelling of the battery.

When the swelling phenomenon occurs, the first lead film 14a is located closer to the inner direction of the case than the second lead film 14b, and thus the first lead film 14a may be broken earlier than the second lead film 14b during the occurrence of swelling phenomenon.

When the swelling phenomenon occurs, the most pressure is applied to the sealing portion 13b in the inner direction of the case. As the first lead film 14a is located closer to the inner direction of the case than the second lead film 14b, fracture occurs preferentially at the interface between the first lead film 14a located in the sealing portion in the inner direction of the case and the sealing portion 13b, and thus it may be easy to control the swelling pressure. Accordingly, the safety of the battery may be improved by preventing an increase in swelling pressure.

When the swelling pressure increases even after fracture occurs preferentially at the interface between the first lead film 14a and the sealing portion 13b, fracture occurs at the interface between the second lead film 14b and the sealing portion 13b, thereby additionally preventing an increase in swelling pressure.

When the interface between the second lead film 14b and the sealing portion 13b is broken, pressure inside the battery may be discharged to the outside, and thus it may be easier to control the swelling pressure.

In an embodiment of the present disclosure, a sensor unit (not shown) and a control unit (not shown) connected to the first lead film 14a and/or the second lead film 14b may be further included. The sensor unit measures the swelling pressure and transmits it to the control unit, and the control unit may allow the first lead film 14a and/or the second lead film 14b to be broken when exceeding a specific pressure threshold.

In an embodiment of the present disclosure, the first lead film 14a may be located at an end of the sealing portion in the inner direction of the case.

In an embodiment of the present disclosure, the second lead film 14b may be located at an end of the sealing portion in the outer direction of the case.

In an embodiment of the present disclosure, the distance between the first lead film 14a and the second lead film 14b may be approximately 10% to 80% of the width d of the sealing portion 13b. Here, the distance between the first lead film 14a and the second lead film 14b refers to a distance between the end portion where the first lead film 14a is closest to the outside direction of the case and the end portion where the second lead film 14b is closest to the inside direction of the case. When the distance between the first lead film 14a and the second lead film 14b satisfies the above-defined range, it may be easier to control the fracture timing of the interface between the first lead film 14a and the sealing portion 13b and the interface between the second lead film 14b and the sealing portion 13b.

In an embodiment of the present disclosure, the radius of curvature of the first lead film 14a may be approximately 50 mm to 200 mm. When the radius of curvature of the first lead film 14a satisfies the above-defined range, the contact area between the first lead film 14a and the electrode lead 11 and the contact area between the first lead film 14a and the sealing portion 13b may be easily increased. In addition, it may be easier to control the fracture timing of the interface between the first lead film 14a and the sealing portion 13b.

In an embodiment of the present disclosure, the radius of curvature of the second lead film 14b may be approximately 50 mm to 200 mm. When the radius of curvature of the second lead film 14b satisfies the above-defined range, the contact area between the second lead film 14b and the electrode lead 11 and the contact area between the second lead film 14b and the sealing portion 13b may be easily increased. In addition, it may be easier to control the fracture timing of the interface between the second lead film 14b and the sealing portion 13b.

Referring to FIG. 3, the width h1 of the first lead film 14a along a first direction that is an extension direction of the electrode lead 11 may be approximately 10% to 40% of the width d of the sealing portion 13b along the first direction. When the width h1 of the first lead film 14a satisfies the above-defined range, the contact area between the first lead film 14a and the electrode lead 11 and the contact area between the first lead film 14a and the sealing portion 13b may be easily increased, and it may be easy to secure sufficient sealing strength during normal operation of the battery.

Referring to FIG. 3, the width h2 of the second lead film 14b along a first direction that is an extension direction of the electrode lead 11 may be approximately 10% to 40% of the width d of the sealing portion 13b along the first direction. When the width h2 of the second lead film 14b satisfies the above-defined range, the contact area between the second lead film 14b and the electrode lead 11 and the contact area between the second lead film 14b and the sealing portion 13b may be easily increased, and it may be easy to secure sufficient sealing strength during normal operation of the battery.

In an embodiment of the present disclosure, the width of the interface between the first lead film 14a and the sealing portion 13b along the first direction, in which the fracture occurs, may be approximately 10% to 40% of the width d of the sealing portion 13b. When the width of the interface between the first lead film 14a and the sealing portion 13b satisfies the above-defined range, it is possible to secure sufficient sealing strength during normal operation of the battery, and fracture may occur easily during the occurrence of swelling phenomenon.

In an embodiment of the present disclosure, the width of the interface between the second lead film 14b and the sealing portion 13b along the first direction, in which the fracture occurs, may be approximately 10% to 40% of the width d of the sealing portion 13b. When the width of the interface between the second lead film 14b and the sealing portion 13b satisfies the above-defined range, it is possible to secure sufficient sealing strength during normal operation of the battery, and fracture may occur easily during the occurrence of swelling phenomenon.

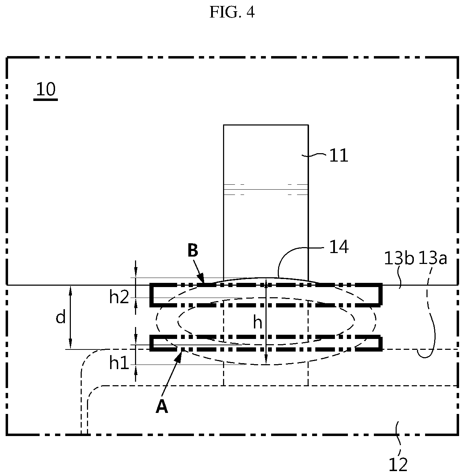

FIG. 4 is a diagram showing an electrode lead, a lead film, and a sealing portion of a secondary battery according to still another embodiment of the present disclosure.

Referring to FIG. 4, the planar shape of the lead film 14 may be a closed loop shape with an empty center. When the lead film 14 has such a closed loop shape, the contact area between the lead film 14 and the electrode lead 11 is large, and the contact area between the lead film 14 and the sealing portion 13b may be more easily increased. In addition, the internal pressure is uniformly distributed throughout the lead film 14, and thus the rigidity of the battery against the internal pressure may be more easily increased.

For example, the lead film 14 may have an approximately donut shape. In another aspect, the lead film 14 may have a convex shape in a direction toward the electrode assembly 12 at a first portion facing the electrode assembly 12, and a convex shape in a direction away from the electrode assembly 12 at a second portion located opposite to the first portion. The first portion may have a convex shape in a direction toward the electrode assembly 12 at a central portion along a second direction approximately perpendicular to a first direction that is an extension direction of the electrode lead 11. The second portion may have a convex shape in a direction away from the electrode assembly 12 at a central portion along a second direction approximately perpendicular to a first direction that is an extension direction of the electrode lead 11.

In an embodiment of the present disclosure, in the lead film 14, the interface between the lead film 14 in the first region A and the sealing portion 13b is primarily broken, and then the interface between the lead film 14 in the second region B and the sealing portion 13b is secondarily broken when the internal pressure of the secondary battery increases.

Here, the first region A refers to a region where a portion of the donut-shaped lead film 14 located relatively close to the direction in which the electrode assembly 12 is accommodated and the sealing portion 13b correspond. The second region B refers to a region where a portion of the donut-shaped lead film 14 located relatively far from the direction in which the electrode assembly 12 is accommodated and the sealing portion 13b correspond.

As the internal pressure of the secondary battery increases, fracture occurs preferentially at the interface between the lead film 14 in the first region A located in the inner direction of the case, which is the portion receiving the most pressure, and the sealing portion 13b, and thus it may be easy to control the swelling pressure. Accordingly, the safety of the battery may be improved by preventing an increase in swelling pressure.

When the swelling pressure increases even after fracture occurs preferentially at the interface between the lead film 14 in the first region A and the sealing portion 13b, fracture occurs at the interface between the lead film 14 in the second region B and the sealing portion 13b, thereby additionally preventing an increase in swelling pressure.

When the interface between the lead film 14 in the second region B and the sealing portion 13b is broken, pressure inside the battery may be discharged to the outside, and thus it may be easier to control the swelling pressure.

In an embodiment of the present disclosure, a sensor unit (not shown) and a control unit (not shown) connected to the first region A and/or the second region B may be further included. The sensor unit measures the swelling pressure and transmits it to the control unit, and the control unit may allow the first region A and/or the second region B to be broken when exceeding a specific pressure threshold.

In an embodiment of the present disclosure, the first region A may be located at an end of the sealing portion in the inner direction of the case.

In an embodiment of the present disclosure, the second region B may be located at an end of the sealing portion in the outer direction of the case.

In an embodiment of the present disclosure, the distance between the first region A and the second region B along the extension direction of the electrode lead 11 may be approximately 10% to 80% of the width d of the sealing portion 13b along the extension direction of the electrode lead 11. Here, the distance between the first region A and the second region B refers to the closest distance among the distances between the first region A and the second region B. When the distance between the first region A and the second region B satisfies the above-defined range, it may be easier to control the fracture timing between the first region A and the second region B.

In an embodiment of the present disclosure, the radius of curvature of the lead film 14 having a closed loop shape may be approximately 50 mm to 200 mm. When the radius of curvature of the donut-shaped lead film 14 satisfies the above-defined range, the contact area between the lead film 14 in the first region A and the electrode lead 11 and the contact area between the lead film 14 and the sealing portion 13b may be easily increased. In addition, the contact area between the lead film 14 in the second region B and the electrode lead 11 and the contact area between the lead film 14 and the sealing portion 13b may be easily increased. It may be easier to control the fracture timing of the first region A and/or the second region B.

Referring to FIG. 4, the total width h of the lead film 14 in a direction parallel to the extension direction of the electrode lead 11 may be approximately 50% to 150% of the width d of the sealing portion 13b in a direction parallel to the extension direction of the electrode lead 11. When the total width of the lead film 14 satisfies the above-defined range, the contact area between the lead film 14 and the electrode lead 11 may be increased, and the contact area between the lead film 14 and the sealing portion 13b may be more easily increased.

Referring to FIG. 4, a width h1 of the first portion of the closed-loop lead film 14 facing the electrode assembly 12 along the first direction may be approximately 10% to 40% of a width of the sealing portion 13b along the first direction. When the width h1 satisfies the above-defined range, the contact area between the lead film 14 and the electrode lead 11 and the contact area between the lead film 14 and the sealing portion 13b may be easily increased, and it may be easy to secure sufficient sealing strength during normal operation of the battery.

Referring to FIG. 4, a width h2 of the second portion of the closed-loop lead film 14 located opposite to the first portion along the first direction may be approximately 10% to 40% of a width of the sealing portion 13b along the first direction. When the width h2 satisfies the above-defined range, the contact area between the lead film 14 and the electrode lead 11 and the contact area between the lead film 14 and the sealing portion 13b may be easily increased, and it may be easy to secure sufficient sealing strength during normal operation of the battery.

Referring to FIG. 4, the width of the first region A in the extension direction of the electrode lead 11 may be approximately 10% to 40% of the width d of the sealing portion 13b in the extension direction of the electrode lead 11. When the width of the first region A satisfies the above-defined range, it is possible to secure sufficient sealing strength during normal operation of the battery, and fracture may occur easily during the occurrence of swelling phenomenon.

Referring to FIG. 4, the width of the second region B in the extension direction of the electrode lead 11 may be approximately 10% to 40% of the width d of the sealing portion 13b in the extension direction of the electrode lead 11. When the width of the second region B satisfies the above-defined range, it is possible to secure sufficient sealing strength during normal operation of the battery, and fracture may occur easily when the internal pressure of the secondary battery increases.

The secondary battery may be a cylindrical, prismatic, or pouch-type secondary battery. Among them, the secondary battery may be a pouch-type secondary battery.

In the case of a pouch-type secondary battery, the strength of the pouch case is weak, and it tends to be more vulnerable to internal pressure as it has various shapes. Accordingly, when the secondary battery according to an embodiment of the present disclosure is a pouch-type secondary battery, it may be more advantageous in terms of safety.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### [Reference Signs]

10: secondary battery
11: electrode lead
12: electrode assembly
13a: accommodating portion
13b: sealing portion
14: lead film
14a: first lead film
14b: second lead film
A: first region
B: second region

## Claims

1. A secondary battery comprising:
an electrode assembly to which an electrode lead is attached;
a case accommodating the electrode assembly;
a sealing portion formed to seal the electrode assembly in the case; and
a lead film surrounding a portion of the outer surface of the electrode lead and interposed between the electrode lead and the sealing portion,
wherein at least a partial region of an edge portion facing the electrode assembly in the lead film has a non-flat shape.

2. The secondary battery according to claim 1,
wherein a radius of curvature of the edge portion facing the electrode assembly in the lead film is 50 mm to 200 mm.

3. The secondary battery according to claim 1,
wherein the lead film has a convex shape in a direction away from the electrode assembly at a central portion along a second direction perpendicular to a first direction that is an extension direction of the electrode lead.

4. The secondary battery according to claim 3,
wherein a width of the lead film along the first direction is 20% to 150% of a width of the sealing portion along the first direction.

5. The secondary battery according to claim 1,
wherein the lead film has a convex shape in a direction toward the electrode assembly at a central portion along a second direction perpendicular to a first direction that is an extension direction of the electrode lead.

6. The secondary battery according to claim 5,
wherein a width of the lead film along the first direction is 20% to 150% of a width of the sealing portion along the first direction.

7. The secondary battery according to claim 1,
wherein the lead film comprises:
a first lead film located relatively close to the electrode assembly; and
a second lead film located relatively far from the electrode assembly.

8. The secondary battery according to claim 7,
wherein the first lead film and the second lead film are disposed to be spaced apart from each other.

9. The secondary battery according to claim 7,
wherein the first lead film has a convex shape in a direction toward the electrode assembly at a central portion along a second direction perpendicular to a first direction that is an extension direction of the electrode lead.

10. The secondary battery according to claim 9,
wherein a width of the first lead film along the first direction is 10% to 40% of a width of the sealing portion along the first direction.

11. The secondary battery according to claim 9,
wherein a width of the interface between the first lead film and the sealing portion along the first direction is 10% to 40% of a width of the sealing portion along the first direction.

12. The secondary battery according to claim 7,
wherein the second lead film has a convex shape in a direction away from the electrode assembly at a central portion along a second direction perpendicular to a first direction that is an extension direction of the electrode lead.

13. The secondary battery according to claim 12,
wherein a width of the second lead film along the first direction is 10% to 40% of a width of the sealing portion along the first direction.

14. The secondary battery according to claim 12,
wherein a width of the interface between the second lead film and the sealing portion along the first direction is 10% to 40% of a width of the sealing portion along the first direction.

15. The secondary battery according to claim 7,
wherein the first lead film and the second lead film are configured such that the interface between the first lead film and the sealing portion is primarily broken, and the interface between the second lead film and the sealing portion is secondarily broken when the internal pressure of the secondary battery increases.

16. The secondary battery according to claim 8,
wherein a distance between the first lead film and the second lead film is 10% to 80% of a width of the sealing portion.

17. The secondary battery according to claim 1,
wherein the planar shape of the lead film is a closed loop shape with an empty center.

18. The secondary battery according to claim 17,
wherein the lead film has a convex shape in a direction toward the electrode assembly at a first portion facing the electrode assembly, and a convex shape in a direction away from the electrode assembly at a second portion located opposite to the first portion.

19. The secondary battery according to claim 18,
wherein the first portion has a convex shape in a direction toward the electrode assembly at a central portion along a second direction perpendicular to a first direction that is an extension direction of the electrode lead, and
the second portion has a convex shape in a direction away from the electrode assembly at a central portion along a second direction perpendicular to a first direction that is an extension direction of the electrode lead.

20. The secondary battery according to claim 18,
wherein the lead film is configured such that the interface between the lead film and the sealing portion is primarily broken at a first region where the first portion and the sealing portion are bonded, and the interface between the lead film and the sealing portion is secondarily broken at a second region where the second portion and the sealing portion are bonded when the internal pressure of the secondary battery increases.

21. The secondary battery according to claim 20,
wherein a distance between the first region and the second region along the extension direction of the electrode lead is 10% to 80% of a width of the sealing portion along the extension direction of the electrode lead.

22. The secondary battery according to claim 17,
wherein a total width of the lead film in a direction parallel to the extension direction of the electrode lead is 50% to 150% of a width of the sealing portion in a direction parallel to the extension direction of the electrode lead.

23. The secondary battery according to claim 20,
wherein a width of the first region in the extension direction of the electrode lead is 10% to 40% of a width of the sealing portion in the extension direction of the electrode lead.

24. The secondary battery according to claim 20,
wherein a width of the second region in the extension direction of the electrode lead is 10% to 40% of a width of the sealing portion in the extension direction of the electrode lead.

25. The secondary battery according to claim 1,
which is a pouch-type secondary battery.
